# EUROPEAN PATENT SPECIFICATION

(11) **EP 3 333 932 B1**
(45) Date of publication and mention of the grant of the patent: **13.02.2019**
(21) Application number: 16202397.2
(22) Date of filing: 06.12.2016
(51) Int. Cl.: H01M 2/10, H01M 10/6569, H01M 10/613, H01M 2/12, H01M 10/6552, A62C 3/00

(54) **BATTERY SYSTEM**
BATTERIESYSTEM
SYSTÈME DE BATTERIE

(43) Date of publication of application: 13.06.2018
(73) Proprietor: Samsung SDI Co., Ltd., Giheung-gu Yongin-si, Gyeonggi-do 17084 (KR)
(72) Inventor: GOLUBKOV, Andrej, 8010 Graz (AT)
(74) Representative: Gulde & Partner

(56) References cited:
- CN-A- 103 779 629
- US-A1- 2010 136 391
- US-A1- 2011 005 781
- US-A1- 2016 315 361

## Description

### Field of the Invention

The present invention relates to a battery system with improved extinguishing system and to a cooling system for a battery system, particularly for a cooling system with integrated extinguishing system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs, each battery cell is coupled to a common current collector structure and a common battery management system. In modular designs, pluralities of battery cells are connected to form submodules and several submodules are connected to form the battery module. Battery management functions may be realized either on module or submodule level and thus interchangeability of the components is improved. One or more battery modules are mechanically and electrically integrated, equipped with a thermal management system and set up for communication with one or more electrical consumers in order to form a battery system.

Mechanical integration of battery modules can be achieved by providing a carrier plate and by positioning individual battery cells or submodules thereon. Fixing the battery cells or submodules may be achieved by fitted depressions in the carrier plate or by mechanical interconnectors such as bolts or screws. Alternatively, the cells or submodule are confined by fastening side plates to lateral sides of the carrier plate. Further, a cover plate may be fixed atop the cells to the first carrier plate and/or the side plates and thus a multilevel battery module can be constructed. The carrier plates and/or the side plates may contain coolant ducts for providing cooling of the cells or submodules.

To provide thermal control of a battery system a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/dissipating heat from the cells is required.

Thermal runaway is an example of an abnormal operation condition of a battery cell that may be entered by strongly overheated or overcharged Lithium ion cell. The critical temperature for transiting into thermal runaway is typically above 150°C and may be exceeded due to a local failure such as an internal short circuit of a cell, heating from a bad electrical contact or a short circuit to an adjacent cell. The thermal runaway is a self-accelerating chemical reaction inside the cell, which produces high amounts of heat and gas, until all available material is exhausted. During thermal runaway the failed cell may heat up to temperatures higher than 700°C and may eject large quantities of hot gas into the battery system. Usually a battery cell comprises a venting opening for allowing a vent-gas jet to be emitted from the venting opening if a certain overpressure inside the cell is exceeded. The emitted vent-gas jet typically comprises a temperature of about 500°C and gas velocities of about 300 m/s, at least in the in case of cells having a high energy density (ca. 200Wh/kg).

During thermal runaway large amounts of heat may be transferred to adjacent cells by the vent-gas jet. As these cells are already heated by the failing cell due to heat conduction via side plates, the base plate and/or their electrical connectors they are prone to transit into thermal runaway themselves. The result may be a thermal runaway propagation through the whole battery system and eventually a battery fire and/or the total loss of an electric vehicle.

According to the prior art, battery systems may comprise extinguishing systems that are triggered as a cell temperature exceeds a predetermined threshold. Actuation means for sensing the temperature rise can comprise melting fuse elements that are configured to disassemble above the temperature threshold. These actuation means are usually arranged in close proximity or directly adjacent to said battery cells and thus there is a high risk of false triggering the extinguishing system. Most extinguishing systems work with irreversible actuation and/or means fluid extinguishing means. False triggering can thus lead to irreversible damage of a functioning battery system and/or to the necessity of replacing the actuation means. Known extinguishing systems require a lot of additional installation space, add a lot of additional weight to the battery system and hence decrease energy efficiency. Prior art disclosures that might be related in relevant form to battery systems and/or extinguishing systems for battery systems can be found in each of the documents US 2010/0136391 A1, US 2011/0005784 A1, US 2016/0315361 A1, and CN 103 779 629 A.

It is thus an object of the present invention to provide a battery system with an improved extinguishing system with increased protection against false triggering and decreased installation space requirements.

### Summary of the Invention

One or more of the drawbacks of the prior art could be avoided or at least reduced by means of the present invention. In particular according to a first aspect of the invention, a battery system is provided comprising at least one plurality of aligned battery cells that are arranged in a first direction, e.g. a y-direction. Each of the battery cells comprises a vent hole that is configured for ejecting gas via a vent-gas jet in an abnormal operation condition of the battery cell, particularly if an internal pressure within the battery cell, e.g. a case of the battery cell, exceeds a predetermined pressure threshold. The battery system further comprises an extinguishing system with a reservoir for an extinguishing agent and at least one conduit means for conducting the extinguishing agent. According to the present invention, the conduit means is positioned such that it is hit by a vent-gas jet emitted by any of the vent holes of the plurality of aligned battery cells and is further configured to be melted by the vent-gas jet.

In other words, the conduit means functions as actuation means that is melted, i.e. triggered, only by a vent-gas jet. Hence, false triggering of the actuation mean, e.g. due to abnormal increased surface temperatures of a normal operating battery cell, is avoided. According to the present invention, the conduit mean as an actuation mean only melts, i.e. triggers, if one of the battery cells transits into an abnormal operation condition in which it ejects a vent-gas jet. Hence, the emission of a vent-gas jet is a mandatory precondition for triggering the extinguishing system and hence this system operates only if a cell enters an abnormal operation state. Thus, false triggering events of the extinguishing system are minimized. The conduit means may be configured as a whole or partially to be melted by a vent-gas jet. In the latter case it may comprise one or more actuation regions that are configured to be melted by a vent-gas jet. The actuation regions may comprise a thinner wall thickness than the remaining regions of the conduit means but may be formed from the same material as the conduit means. The conduit means may be formed from a low-melting metal, e.g. aluminum, and/or from a plastic material. Alternatively, the actuation region may comprise at least one opening that is filled with a plug, wherein the plug material is configured to be melted by a vent-gas jet or wherein the plug is configured to be loosened from the opening by a vent-gas jet, e.g. by using a hot melt adhesive.

The extinguishing agent used in the extinguishing system may be a gas, e.g. nitrogen, carbon dioxide or halon based fire suppression, a liquid, e.g. water, or an expanding fire retardant foam. The reservoir preferably is a pressurized gas container that is fluidly connected to the conduit means such that the gas is emitted with high pressure from the conduit means once it is (partially) melted. Further preferred, additional sensors such as temperature sensors or pressure sensors might be used to fill the conduit means with the extinguishing agent once or shortly before the conduit means is melted. Exemplarily sensor actuated valves may be arranged between the pressurized gas container and the conduit means.

In the battery system of the present invention, a shortest distance between the at least one conduit means and each of the vent holes is larger than half the extension of an average vent-gas jet of one of the battery cells. The extension of an average vent-gas jet is easily determined by a skilled person conducting experiments in a test environment. The vent hole of each of the battery cells preferably comprises an overpressure valve that is configured to emit a vent-gas jet if an internal pressure of the cell exceeds a certain threshold. The overpressure valve may be configured as a notch that is inserted in the vent hole.

By using standardized overpressure valves that are configured to open at a certain pressure threshold in each cell, the vent-gas jet of each battery cell will be comparable. A skilled person can hence easily derive the extension of an average vent-gas jet, particularly an extension in an emission direction of the vent-gas jet, e.g. in a direction that is normal to a surface of the overpressure valve. The predetermined overpressure will depend e.g. on the wall thickness of a battery case of the battery cell and is adjusted such that the vent hole emits a vent-gas jet before the case breaks. By arranging the conduit means at a distance to each of the vent holes that is at least half the extension of such average vent-gas jet, false triggering of the extinguishing system is securely avoided. The extension of the vent-gas jet may be defined as the distance from the vent hole at which no significant temperature rise can be detected anymore. In other words, half the extension of an average vent-gas jet of one of the battery cells may reached at a point where the temperature of the gas vent-jet may equal the half of its temperature at the vent hole. Thus, half the extension of an average vent-gas jet can be determined by measuring the vent-gas jets temperature along its extension.

Further preferred, each of the battery cells comprises a battery case for accommodating an electrode assembly and a cap assembly that is placed on the battery case and that is configured for closing the battery case. According to this embodiment, the vent hole is arranged in the cap assembly. Further preferred, the conduit means is thermally isolated from the battery cases of each the at least one plurality of aligned battery cells. Extinguishing systems known from the prior art usually have actuation means that are arranged close to the battery case so as to be triggered if a surface temperature of the battery case surface exceeds a certain temperature. However, even during normal operation conditions the batteries temperature rises due to ohmic losses. Particularly in hot environments false triggering of the actuation means (conduit means) may thus occur. By thermally isolating the conduit means from the battery case, the risk of false triggering (melting) the actuation means (conduit means) is minimized. Preferably, each battery cell further comprises a positive terminal and a negative terminal that arranged at a distance from each other in a third direction, e.g. x-direction, and wherein the vent hole is arranged between the positive terminal and the negative terminal.

The thermal isolation between conduit means and battery case may simply be achieved by a space between the conduit means and the battery case that is left void, i.e. filled with air or an inert gas. Thus, heat conduction between battery case and conduit means is minimized. Further, a blocking means may be arranged between the battery case and the conduit means, wherein the blocking means is configured for intercepting radiant heat and convection between the battery case and the conduit means. The blocking means may be realized by a plurality of pinhole apertures or at least one perforated plate, arranged between the cap plates of the battery cells and a respective conduit mean. The apertures or perforations are then configured to let pass a vent-gas jet emitted by a battery's vent hole. Particularly preferred, the conduit means is arranged above the cap assemblies of the at least one plurality of aligned battery cells and comprises a distance in a second direction, e.g. z-direction to each of the vent holes that is larger than half the extension of an average vent-gas jet of one of the battery cells. The second direction is perpendicular to the first direction.

According to a preferred embodiment of the battery system, the vent holes of the at least one plurality of aligned battery cells are aligned in the first direction. In other words, the vent holes of all battery cells of a plurality of aligned battery cells are arranged on or close to a straight line connecting a plurality of the vent holes. Further preferred, the at least one conduit means is arranged at a distance from the vent holes in a second direction that is substantially perpendicular to the first direction and to a third direction. Particularly preferred, the first direction and third direction are directions in the x-y-plane and the second direction corresponds to the z-direction or the height above the x-y-plane. In other words, the at least one conduit means is arranged at a distance above the vent holes. Further preferred, the at least one conduit means is a conduit pipe that is aligned with the vent holes of the at least one plurality of aligned battery cells in the first direction.

According to a particularly preferred embodiment of the present invention, the battery system further comprise a cooling circuit for cooling the at least one plurality of battery cells. The cooling circuit comprises an evaporator that is in thermal contact with the at least one plurality of battery cells and that is configured for causing an incombustible or flame-retardant coolant to absorb heat from the plurality of aligned battery cells. In other words, the cooling circuit is operated with an incombustible or flame-retardant coolant as refrigerant. According to the invention, the conduit means as described before is part of the cooling circuit and the coolant is used as extinguishing agent, e.g. for extinguishing a battery cell in a thermal runaway. According to this embodiment, an extinguishing system is functional integrated in a cooling circuit, i.e. cooling system, of the battery system and thus no or only little extra installation space is required for applying the extinguishing system to the battery system.

The cooling circuit preferably further comprises a compressor that is configured for compressing the coolant such as to increase pressure and temperature of the coolant, a condenser for liquefying the compressed coolant such as to release heat from the compressed coolant, a throttle or an expansion valve for reducing pressure and temperature of the liquefied coolant and/or a reservoir for storing the coolant. The cooling circuit further comprises coolant piping for interconnecting all parts of the coolant circuit. The conduit means are connected to the coolant piping or may be an integral part of the coolant piping. Further preferred, the conduit means are an integral part of the evaporator.

Further preferred, the battery system comprises a plurality of battery modules that are arranged apart from each other in the second direction, e.g. the z-direction, wherein each battery module comprises a plurality of aligned battery cells that are arranged in the first direction. According to this embodiment, at least one conduit mean is arranged between the adjacent battery modules, i.e. between an upper and a lower battery module. The conduit mean is further configured as a carrier plate that supports the upper one of the adjacent battery modules. In other words, in a multi-storage battery system the battery plate of an upper battery module is configured to be melted by a vent-gas jet of a lower battery module.

The extinguishing system of the present invention is hence functionally integrated in a multi-storage battery system and thus requires less additional installation space. The battery system may further comprise a plurality of battery modules that are arranged apart from each other in a third direction, i.e. in x-direction. The conduit means may be configured to span above or below each of these neighboring battery modules, i.e. as a common carrier plate of the upper storage of battery modules. Alternatively, the conduit means may be individually aligned with the plurality of vent holes of neighboring battery modules, i.e. as a tortuous conduit pipe or as plurality of conduit pipes extending along individual battery modules.

According to a preferred embodiment of the present invention, the battery system further comprises a housing for accommodating the plurality of battery cells. The housing preferably comprises a bottom wall that may be constituted by a carrier plate of the battery system. The carrier plate might comprise cooling means for cooling the battery cells disposed on the carrier plate. The carrier plate might be configured as evaporator of a cooling circuit as described above. The housing further comprises a pair of first lateral sidewalls facing each other and a pair of second lateral sidewalls facing each other. The lateral sidewalls are attached to the carrier plate and each first lateral sidewall is attached to two second lateral sidewalls and each second lateral sidewall is attached to two first lateral sidewalls. The pluralities of battery cells and further components of the battery system, e.g. a battery management unit or battery discharge unit, may be inserted into the housing. A battery system cover might be configured to be attached to the housing.

Another preferred aspect of the present invention relates to battery system with a cooling circuit, i.e. a cooling system, that is configured for cooling the battery system. The cooling circuit is configured to be used and is suitable for a battery system that comprises at least one plurality of aligned battery cells, wherein the cells are arranged in a first direction. Each of the battery cells comprises a battery case and a vent hole within the battery case. According to this aspect of the invention, the cooling circuit comprises a conduit means for conducting an incombustible or flame-retardant coolant and an evaporator that is in thermal contact with a first plurality of aligned battery cells and that is configured for causing the coolant to absorb heat from the first plurality of aligned battery cells. According to the invention, the conduit means is positioned such that it is hit by a vent-gas jet emitted by any of the vent holes of the first plurality of aligned battery cells and is further configured to be melted by this vent-gas jet. In other words, the cooling circuit of the invention further functions as extinguishing system for a battery system without requiring additional installation space for the extra functionality.

In a preferred embodiment, the evaporator is positioned such that it is hit by a vent-gas jet emitted by any of the vent holes of a second plurality of aligned battery cells. Particularly preferred, the second plurality of battery cells belongs to at least one lower battery module and the first plurality of battery cells belongs to at least one upper battery module. The evaporator is further configured to be melted by the vent-gas jet of the second plurality of aligned battery cells. In other words, the battery cells that are cooled by the evaporator are different from the battery cells that might actuate the evaporator as part of an extinguishing system. In the cooling circuit of this embodiment a conduit means and the evaporator are configured as actuation means, i.e. to be melted in the case of a vent-gas jet. Thus this cooling circuit is suitable for battery systems with multiple stacked battery modules.

Further preferred, the cooling circuit is configured for a battery system that comprises a plurality of battery modules that are arranged apart from each other in the second direction. Therein each battery module comprises a plurality of aligned battery cells that are arranged in the first direction. In the cooling circuit of this embodiment, the evaporator is arranged between battery modules that are adjacent in the second direction, i.e. between an upper (first) battery module and a lower (second) battery module, and is configured as a carrier plate that supports the upper one of the adjacent battery modules. The evaporator is positioned such that it is hit by a vent-gas jet emitted by any of the vent holes of the lower plurality of aligned battery cells, i.e. functions as part of the extinguishing system of the lower battery module. In order to do so, the evaporator is configured to be melted by the vent-gas jet of the lower battery module. Preferably, as the evaporator comprises sufficient structural strength for supporting a battery module, the evaporator is only partially configured to be melted by the vent-gas jet, e.g. in actuation regions as described above.

The cooling circuit further comprises the conduit means that is positioned such that it is hit by a vent-gas jet emitted by any of the vent holes of the upper one of the adjacent battery modules, i.e. functions as part of the extinguishing system of the upper battery module. Thus, the cooling circuit of this embodiment provides an extinguishing system for a battery system with stacked battery modules, wherein the extinguishing system requires only minimal extra installation space. The cooling circuit may further comprise a second carrier plate that is supporting the lower battery module and is in thermal contact with the lower battery module. The second carrier plate is configured for causing the coolant to absorb heat from the lower one of the adjacent battery modules. If the lower battery module is the lowest module of a battery system, the carrier plate is not part of an extinguishing system.

The cooling circuit may further comprise a compressor that is configured for compressing the coolant such as to increase pressure and temperature of the coolant, a condenser for liquefying the compressed coolant such as to release heat from the compressed coolant, a throttle or an expansion valve for reducing pressure and temperature of the liquefied coolant and/or a reservoir for storing the coolant. The cooling circuit further comprises coolant piping for interconnecting all parts of the coolant circuit. The conduit means may be connected to the coolant piping or may be an integral part of the coolant piping.

### Brief Description of the Drawings

Features will become apparent to those of ordinary skill in the art by describing in detail exemplary embodiments with reference to the attached drawings in which:
- Fig. 1: illustrates a (A) side view and (B) a top view of a battery cell according to an embodiment;
- Fig. 2: illustrates a schematic top view of a battery module according to an embodiment;
- Fig. 3: illustrates a schematic side view of a battery module according to an embodiment;
- Fig. 4: illustrates a schematic top view of a battery system according to a first embodiment;
- Fig. 5: illustrates a schematic side view of a battery system according to the first embodiment;
- Fig. 6: illustrates a schematic side view of a battery system according to a second embodiment; and
- Fig. 7: illustrates a schematic side view of a battery system according to a third embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

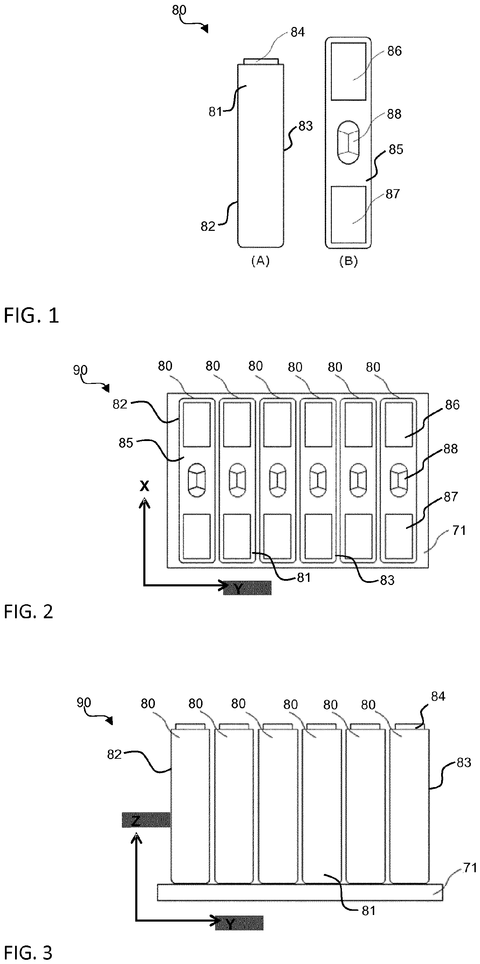

Figure 1 is a perspective illustration of a (A) side view and (B) a top view of a battery cell according to an embodiment.

The battery cell 80 shown in Fig. 1 comprises a case 81 for accommodating an electrode assembly, the case 81 containing an electrolyte. The battery cell 80 may also include a cap assembly 84 for sealing an opening of the case 81. The battery cell 80 will be described as a non-limiting example of a lithium ion secondary battery configured to have a prismatic shape.

The electrode assembly may be formed as a jelly roll type electrode assembly by spirally winding a positive electrode and a negative electrode with a separator in between. The positive electrode and the negative electrode may respectively include coated regions of current collectors formed of a thin metal foil, on which an active material may be coated, and may respectively include positive and negative electrode uncoated regions and of the current collectors on which no active material is coated. As a non-limiting example, the coated region of the positive electrode may be formed by coating a base material formed of a metal foil, such as an aluminum foil, with an active material, such as transition metal oxide or the like. Also, the coated region of the negative electrode may be formed by coating a base material formed of a metal foil, such as a copper or nickel foil, with an active material, such as carbon, graphite, or the like.

The positive electrode uncoated region may be formed on one lateral end of the positive electrode in a longitudinal direction of the positive electrode, and the negative electrode uncoated region may be formed on one lateral end of the negative electrode in a longitudinal direction of the negative electrode. The positive electrode uncoated region and the negative electrode uncoated region may be on sides that are opposite to each other with respect to the coated regions. Further, the separator may include a plurality of separators, which may be spirally wound after the positive electrode, the negative electrode, and the separator are alternately situated. The present invention is not limited thereto, and the electrode assembly may be configured to have a structure including a plurality of sheets of the positive electrode, the separator, and the negative electrode that are repeatedly stacked.

The electrode assembly may be accommodated in the case 81 together with an electrolyte solution. The electrolyte solution may be made of a lithium salt, such as LiPF6 or LiBF4 with an organic solvent, such as EC, PC, DEC, EMC, or EMC. The electrolyte solution may be in a liquid, solid, or gel state. The case 81 may be configured to have a substantially cuboidal shape, and an opening may be formed at one side thereof. The case 81 may be formed of a metal, such as aluminum.

The case 81 may include a bottom surface having a substantially rectangular shape, and may include a pair of first lateral walls 82, 83, that are the wide side surfaces, and a pair of second lateral walls connected vertically to end portions of the bottom surface, respectively, to form a space for accommodating the electrode assembly. The first lateral walls 82, 83 may face each other, and the second lateral walls may be positioned to face each other and may be connected to the first lateral walls 82, 83. A length of an edge at which the bottom surface and a first lateral wall 82, 83 are connected to each other may be longer than that of an edge at which the bottom surface and a second lateral wall are connected to each other. Preferably, adjacent first and second lateral walls enclose an angle of about 90°.

The cap assembly 84 may include a cap plate 85 for covering the opening of the case 81 by being bonded to the case 81, and may include a positive terminal 86 (first terminal) and a negative terminal 87 (second terminal), which externally protrude from the cap plate 85 and are electrically connected to the positive electrode and the negative electrode, respectively. The cap plate 85 may be configured to have a shape of a plate that may be extended in one direction, and that may be bonded to the opening of the case 81 The cap plate 85 includes a vent hole 88 that communicate with an interior of the cap assembly 84. Further, a vent member including a notch, which is opened due to a predetermined pressure, is mounted to or in the vent hole 88.

The positive terminal 86 and the negative terminal 87 may be mounted to protrude upward from the cap plate 85. The positive terminal 86 may be electrically connected to the positive electrode via a current collecting tab, and the negative terminal may be electrically connected to the negative electrode via a current collecting tab. A terminal connecting member for electrically connecting the positive terminal 86 and the current collecting tab may be mounted between the positive terminal 86 and the current collecting tab. The terminal connecting member may be inserted into a hole formed at the positive terminal 86, such that a lower portion thereof may be welded to the current collecting tab.

Referring to Figs. 2 and 3, a battery module 90 comprises a plurality of battery cells 80 arranged and aligned in a first direction, i.e. the y-direction. Each battery cell 80 is a prismatic (or rectangular) cell 80 and the wide flat side surfaces 18, 19 of the cells 80 being stacked together to form a battery module 90. In other words, the prismatic battery cells 80 are arranged such that first lateral walls 18, 19 of adjacent battery cells 80 face each other and/or are in close contact to each other. Spacers (not shown) may be positioned between first lateral side walls 82, 83 of adjacent cells 80. The positive and negative electrode terminals 86 and 87 of neighboring battery cells 80 are electrically connected through a bus bar (not shown). The battery modules 90 may be used as power source unit by electrically connecting the plurality of battery cells 80 as one bundle.

Each of the battery cells 80 comprises a vent hole 88 that is arranged in the cap assembly 84 of the battery cell 80 with a distance to the positive terminal 86 and the negative terminal 87. The vent holes 88 of a plurality of battery cells 80 aligned in the first direction are also arranged in the first direction. Further, the plurality of battery cells 80 is arranged on a first carrier plate 71 that is configured for supporting the weight of the battery cells 80 and may further be configured for cooling the plurality of battery cells 80.

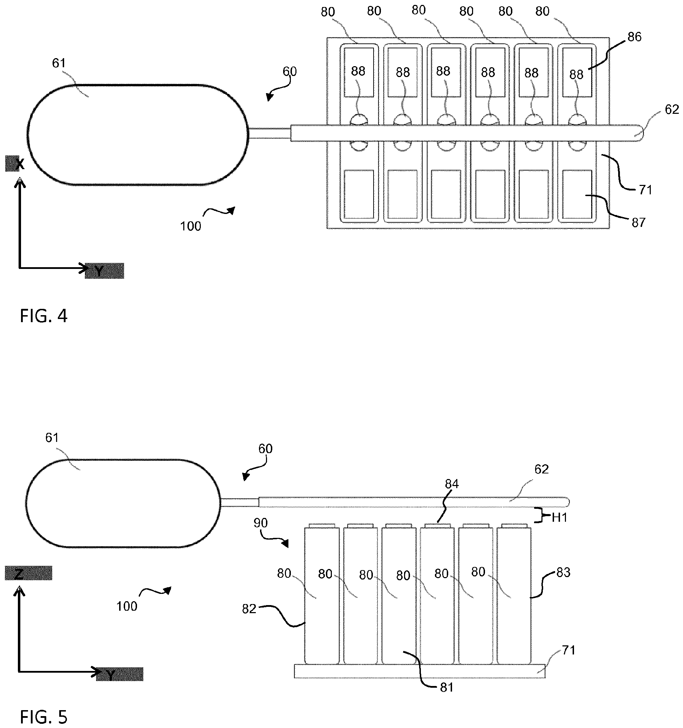

Referring to Figs. 4 and 5 a battery system 100 according to a first embodiment comprises a battery module 90 as described with respect to Figs. 2 and 3. The battery system 100 may include a plurality of such battery modules 90 that are spaced apart in a second direction, i.e. the x-direction. The battery system 100 according to the first embodiment further comprises an extinguishing system 60 that is configured for preventing or at least mitigating a thermal runaway. Therefore the extinguishing system 60 comprises a reservoir 61 that is configured for storing an incombustible and flame-retardant extinguishing agent. In the present case, the reservoir 61 is configured as pressurized gas storage and the extinguishing agent is carbon dioxide.

The extinguishing system 60 further comprises a conduit means 62 that is configured as a conduit pipe 62. The conduit pipe 62 is fluidly connected with the reservoir 61 and is configured to tightly enclose the extinguishing agent in a normal operation state of the battery module 90. The conduit pipe 62 is aligned with the vent holes 88 of the plurality of battery cells 80 and is further arranged at a distance H1 in the z-direction towards the vent hole 88 of each battery cell 80, wherein H1 roughly equals half the extension of an average gas-vent jet of the battery cells 80 in the z-direction. The conduit pipe 62 is further configured to be melted by a gas-vent jet of the battery cells 80. Particularly, the conduit pipe 62 consists of a plastic material with a melting temperature below the temperature of the vent-gas jet at half of its extension in the z-direction.

According to the first embodiment shown in Figs. 4 and 5, the conduit pipe 62 melts as soon as it is hit by a gas-vent jet emitted by any of the vent holes 88 of the battery cells 80. Hence, the pressurized carbon dioxide is emitted from the breach of the conduit pipe 62 and is distributed over the plurality of battery cells 80. The carbon dioxide expands as soon as it leaves the conduit pipe 62 and thus cools the battery cells 80. Further, the carbon dioxide at least diminishes battery fires due to depletion of oxygen. The battery system 100 of Figs. 4 and 5 or at least the battery module 90 of Figs. 4 and 5 may be arranged in a housing for confining the carbon dioxide around the battery cells 80.

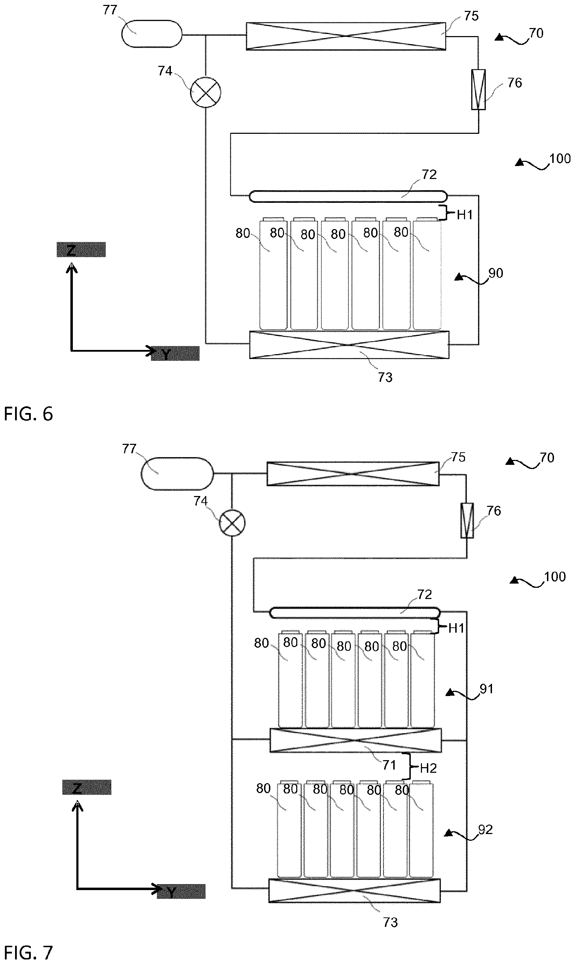

Fig. 6 shows a battery system 100 according to a second embodiment of the present invention. The battery system 100 again comprises a plurality of aligned battery cells 80, a reservoir 77 for an extinguishing agent and a conduit means 72 that is arranged such that it is hit by a vent-gas jet of the cells 80 and that is configured to be melted by that vent-gas jet. According to the second embodiment, the reservoir 77 and the conduit means 72 are part of the cooling circuit 70.

The cooling circuit comprises the reservoir 77 that is configured for storing an incombustible and flame-retardant coolant. The reservoir 77 is fluidly connected via coolant piping with a condenser 75, a throttle 76 downstream of the condenser 75, the conduit means 72 downstream of the throttle 76, an evaporator 73 downstream of the conduit means 72 and a compressor 74 downstream of the evaporator 73 and upstream of the reservoir 77.

The conduit means 72 is configured as tortuous conduit pipe 72 that is arranged at a distance H1 above a plurality of battery modules 90 spaced apart from each other in x-direction. The evaporator 73 is configured as carrier plate that mechanically supports the plurality of battery cells 80. The extinguishing system of the battery system 100 is functionally integrated in the cooling circuit 70 and thus no extra installation space is required for the extinguishing system. In other word, the refrigerant of the coolant circuit 70 is the extinguishing agent of the battery system 100.

Fig. 7 shows a battery system 100 according to a third embodiment of the present invention. The battery system 100 comprises a first battery module 91 that is arranged above a second battery module 92. The second battery module 92 is supported by a second carrier plate 73 and the first battery module 91 is supported by a first carrier plate 71. The battery system further comprises a reservoir 77 for an extinguishing agent and a conduit means 72. The conduit means 72 is placed at a distance H1 above the vent holes of the first battery module 91 such that it is hit by a vent-gas jet emitted by a cell 80 of the first module 91 and is configured to be melted by such vent-gas jet. The first carrier plate 71 is placed at a distance H2 above the vent holes of the second battery module 92 such that it is hit by a vent-gas jet emitted by a cell 80 of the second module 92 and is configured to be melted by such vent-gas jet

The cooling circuit 70 according to the third embodiment comprises the reservoir 77 that is configured for storing an incombustible and flame-retardant coolant. The reservoir 77 is fluidly connected via coolant piping with a condenser 75, a throttle 76 downstream of the condenser 75, the conduit means 72 downstream of the throttle 76, the first and second carrier plates 71, 73 in parallel downstream of the conduit means 72 and a compressor 74 downstream of the carrier plates 71, 73 and upstream of the reservoir 77. The carrier plates 71, 73 are configured as evaporators, i.e. for absorbing heat from the respective battery module 91, 92 by evaporating the coolant provided by the cooling circuit 70. Thus, the first carrier plate 71 is part of the cooling circuit 70 as well as of the extinguishing system of the battery system 100, while the refrigerant of the coolant circuit 70 is the extinguishing agent of the battery system 100. Hence installation space of battery system 100 is minimal.

### Reference signs

- 100: battery system
- 90: battery module
- 91: first battery module / upper battery module
- 92: second battery module / lower battery module

- 80: battery cell
- 81: case
- 82, 83: a pair of first lateral walls
- 84: cap assembly
- 85: cap plate
- 86: positive terminal (first terminal)
- 87: negative terminal (second terminal)
- 88: vent hole

- 70: cooling circuit
- 71: evaporator / first carrier plate
- 72: conduit means
- 73: evaporator / second carrier plate
- 74: compressor
- 75: condenser
- 76: throttle
- 77: reservoir

- 60: extinguishing system
- 61: reservoir
- 62: conduit means / conduit pipe

## Claims

1. A battery system (100), comprising:
at least one plurality of aligned battery cells (80) arranged in a first direction (y), each of the battery cells (80) comprising a vent hole (88); and
an extinguishing system (60) with a reservoir (61) for an extinguishing agent and at least one conduit means (62) for conducting the extinguishing agent,
wherein the at least one conduit means (62) is positioned such that it is hit by a vent-gas jet emitted by any of the vent holes (88) of the plurality of aligned battery cells (80),
wherein the at least one conduit means (62) is configured to be melted by the vent-gas jet, and
wherein the shortest distance between the at least one conduit means (62) and each of the vent holes (88) is larger than half the extension of an average vent-gas jet of one of the battery cells (80).

2. The battery system (100) according to claim 1, wherein each of the battery cells (80) comprises a battery case (81) for accommodating an electrode assembly and a cap assembly (84) that is placed on the battery case (81) for closing the battery case (81) and wherein the vent hole (88) is arranged in the cap assembly (84).

3. The battery system (100) according to claim 1 or 2, wherein the at least one conduit means (62) is thermally isolated from the battery cases (81) of the at least one plurality of aligned battery cells (80).

4. The battery system (100) according to claim 2 or 3, wherein the at least one conduit means (62) is arranged above the cap assemblies (84) of at least one plurality of aligned battery cells (80) and comprises a distance in a second direction (z) to each of the vent holes (88) that is larger than half the extension of an average vent-gas jet of one of the battery cells (80).

5. The battery system (100) according to any one of the preceding claims, wherein the vent holes (88) of the at least one plurality of aligned battery cells (80) are aligned in the first direction (y).

6. The battery system (100) according to claim 5, wherein at least one conduit means is a conduit pipe (62) that is aligned with the vent holes (88) of the at least one plurality of aligned battery cells (80) in the first direction (y).

7. The battery system (100) according to any one of the preceding claims, further comprising a cooling circuit (70) with an evaporator (71) in thermal contact with the at least one plurality of battery cells (80) and configured for causing an incombustible or flame-retardant coolant to absorb heat from the plurality of aligned battery cells (80), wherein the coolant is used as extinguishing agent and the at least one conduit means (72) is part of the cooling circuit (70).

8. The battery system (100) according to claim 7, comprising
a first battery module (91) and a second battery module (92) arranged apart from each other in a second direction (z), each battery module comprising a plurality of aligned battery cells (80) arranged in the first direction (y),
wherein the evaporator (71) is arranged between battery modules adjacent in the second direction (z) and is configured as a carrier plate (71) that supports the first battery module (91).

9. The battery system (100) according to claim 8,
wherein the evaporator (71) is in thermal contact with the first battery module (91) and configured for causing the coolant to absorb heat from the first battery module (91), and
wherein the evaporator (71) is positioned such that it is hit by a vent-gas jet emitted by any of the vent holes (88) of the second battery module (92) and is configured to be melted by the vent-gas jet.

10. The battery system (100) according to claim 8 or 9, comprising
wherein the at least one conduit means (72) is positioned such that it is hit by a vent-gas jet emitted by any of the vent holes (88) of the first battery module (91).

11. The battery system (100) of claim 10, further comprising a second carrier plate (73) that is supporting and in thermal contact with the second battery module (92) and is configured for causing the coolant to absorb heat from the second battery module (92).

12. The battery system (100) of any one of claims 8 to 11, further comprising at least one of
a compressor (74) for compressing the coolant such as to increase pressure and temperature of the coolant;
a condenser (75) for liquefying the compressed coolant such as to release heat from the compressed coolant;
a throttle (76) for reducing pressure and temperature of the liquefied coolant; and
a reservoir (77) for the coolant.

## Patentansprüche

1. Batteriesystem (100), umfassend:
mindestens eine Mehrzahl aneinandergereihter Batteriezellen (80), die in einer ersten Richtung (y) angeordnet sind, wobei jede der Batteriezellen (80) ein Entlüftungsloch (88) umfasst; und
ein Löschsystem (60) mit einem Behälter (61) für ein Löschmittel und mindestens einem Leitungsmittel (62) zum Leiten des Löschmittels,
wobei das mindestens eine Leitungsmittel (62) derart positioniert ist, dass es von einem Entlüftungsgasstrahl, der durch ein beliebiges der Entlüftungslöcher (88) der Mehrzahl aneinandergereihter Batteriezellen (80) abgegeben wird, getroffen wird,
wobei das mindestens eine Leitungsmittel (62) dafür ausgelegt ist, durch den Entlüftungsgasstrahl geschmolzen zu werden, und
wobei der geringste Abstand zwischen dem mindestens einen Leitungsmittel (62) und jedem der Entlüftungslöcher (88) größer als die halbe Ausdehnung eines durchschnittlichen Entlüftungsgasstrahls von einer der Batteriezellen (80) ist.

2. Batteriesystem (100) nach Anspruch 1, wobei jede der Batteriezellen (80) ein Batteriegehäuse (81) zur Aufnahme einer Elektrodenanordnung und eine auf dem Batteriegehäuse (81) angeordnete Kappenanordnung (84) zum Verschließen des Batteriegehäuses (81) umfasst, und wobei das Entlüftungsloch (88) in der Kappenanordnung (84) angeordnet ist.

3. Batteriesystem (100) nach Anspruch 1 oder 2, wobei das mindestens eine Leitungsmittel (62) von den Batteriegehäusen (81) der mindestens einen Mehrzahl aneinandergereihter Batteriezellen (80) thermisch isoliert ist.

4. Batteriesystem (100) nach Anspruch 2 oder 3, wobei das mindestens eine Leitungsmittel (62) über den Kappenanordnungen (84) der mindestens einen Mehrzahl aneinandergereihter Batteriezellen (80) angeordnet ist und einen Abstand in einer zweiten Richtung (z) zu jedem der Entlüftungslöcher (88) aufweist, der größer als die halbe Ausdehnung eines durchschnittlichen Entlüftungsgasstrahls von einer der Batteriezellen (80) ist.

5. Batteriesystem (100) nach einem der vorhergehenden Ansprüche, wobei die Entlüftungslöcher (88) der mindestens einen Mehrzahl aneinandergereihter Batteriezellen (80) in der ersten Richtung (y) ausgerichtet sind.

6. Batteriesystem (100) nach Anspruch 5, wobei das mindestens eine Leitungsmittel ein Leitungsrohr (62) ist, das an den Entlüftungslöchern (88) der mindestens einen Mehrzahl aneinandergereihter Batteriezellen (80) in der ersten Richtung (y) ausgerichtet ist.

7. Batteriesystem (100) nach einem der vorhergehenden Ansprüche, ferner umfassend einen Kühlkreislauf (70) mit einem Verdampfer (71), der in thermischem Kontakt mit der mindestens einen Mehrzahl Batteriezellen (80) ist und dafür ausgelegt ist, eine Absorption von Wärme der Mehrzahl aneinandergereihter Batteriezellen (80) durch ein nicht brennbares oder schwer entflammbares Kühlmittel zu bewirken, wobei das Kühlmittel als ein Löschmittel verwendet wird und das mindestens eine Leitungsmittel (72) Teil des Kühlkreislaufes (70) ist.

8. Batteriesystem (100) nach Anspruch 7, umfassend ein erstes Batteriemodul (91) und ein zweites Batteriemodul (92), die beabstandet voneinander in einer zweiten Richtung (z) angeordnet sind, wobei jedes Batteriemodul eine Mehrzahl aneinandergereihter Batteriezellen (80) umfasst, die in der ersten Richtung (y) angeordnet sind,
wobei der Verdampfer (71) zwischen in der zweiten Richtung (z) benachbarten Batteriemodulen angeordnet ist und als eine Trägerplatte (71) ausgelegt ist, die das erste Batteriemodul (91) trägt.

9. Batteriesystem (100) nach Anspruch 8,
wobei der Verdampfer (71) in thermischem Kontakt mit dem ersten Batteriemodul (91) ist und dafür ausgelegt ist, eine Absorption von Wärme von dem ersten Batteriemodul (91) durch das Kühlmittel zu bewirken, und
wobei der Verdampfer (71) derart positioniert ist, dass er von einem Entlüftungsgasstrahl, der durch ein beliebiges der Entlüftungslöcher (88) des zweiten Batteriemoduls (92) abgegeben wird, getroffen wird, und dafür ausgelegt ist, durch den Entlüftungsgasstrahl geschmolzen zu werden.

10. Batteriesystem (100) nach Anspruch 8 oder 9,
wobei das mindestens eine Leitungsmittel (72) derart positioniert ist, dass es von einem Entlüftungsgasstrahl, der durch ein beliebiges der Entlüftungslöcher (88) des ersten Batteriemoduls (91) abgegeben wird, getroffen wird.

11. Batteriesystem (100) nach Anspruch 10, ferner umfassend eine zweite Trägerplatte (73), die das zweite Batteriemodul (92) trägt und in thermischem Kontakt damit ist und dafür ausgelegt ist, eine Absorption von Wärme von dem zweiten Batteriemodul (92) durch das Kühlmittel zu bewirken.

12. Batteriesystem (100) nach einem der Ansprüche 8 bis 11, ferner umfassend mindestens eines von
einem Verdichter (74) zum Verdichten des Kühlmittels, um Druck und Temperatur des Kühlmittels so zu erhöhen; einem Verflüssiger (75) zum Verflüssigen des verdichteten Kühlmittels, um Wärme aus dem verdichteten Kühlmittel freizugeben;
einer Drosseleinrichtung (76) zum Verringern von Druck und Temperatur des verflüssigten Kühlmittels; und einem Behälter (77) für das Kühlmittel.

## Revendications

1. Système de batterie (100), comprenant :
au moins une pluralité d'éléments de batterie alignés (80) agencés dans une première direction (y), chacun des éléments de batterie (80) comprenant un trou d'évent (88) ; et
un système d'extinction (60) avec un réservoir (61) pour un agent d'extinction et au moins un moyen de conduite (62) pour conduire l'agent d'extinction,
dans lequel l'au moins un moyen de conduite (62) est positionné de sorte qu'il soit heurté par un jet de gaz d'évent émis par l'un quelconque des trous d'évent (88) de la pluralité d'éléments de batterie alignés (80),
dans lequel l'au moins un moyen de conduite (62) est configuré pour être fondu par le jet de gaz d'évent, et
dans lequel la distance la plus courte entre l'au moins un moyen de conduite (62) et chacun des trous d'évent (88) est supérieure à la moitié de l'étendue d'un jet de gaz d'évent moyen de l'un des éléments de batterie (80).

2. Système de batterie (100) selon la revendication 1, dans lequel chacun des éléments de batterie (80) comprend un boîtier de batterie (81) destiné à recevoir un ensemble d'électrodes et un ensemble de capuchon (84) qui est placé sur le boîtier de batterie (81) pour fermer le boîtier de batterie (81) et dans lequel le trou d'évent (88) est agencé dans l'ensemble de capuchon (84).

3. Système de batterie (100) selon la revendication 1 ou 2, dans lequel l'au moins un moyen de conduite (62) est isolé thermiquement des boîtiers de batterie (81) de l'au moins une pluralité d'éléments de batterie alignés (80).

4. Système de batterie (100) selon la revendication 2 ou 3, dans lequel l'au moins un moyen de conduite (62) est agencé au-dessus des ensembles de capuchon (84) d'au moins une pluralité d'éléments de batterie alignés (80) et présente une distance dans une deuxième direction (z) par rapport à chacun des trous d'évent (88) qui est supérieure à la moitié de l'étendue d'un jet de gaz d'évent moyen de l'un des éléments de batterie (80).

5. Système de batterie (100) selon l'une quelconque des revendications précédentes, dans lequel les trous d'évent (88) de l'au moins une pluralité d'éléments de batterie alignés (80) sont alignés dans la première direction (y).

6. Système de batterie (100) selon la revendication 5, dans lequel au moins un moyen de conduite est un tuyau de conduite (62) qui est aligné avec les trous d'évent (88) de l'au moins une pluralité d'éléments de batterie alignés (80) dans la première direction (y).

7. Système de batterie (100) selon l'une quelconque des revendications précédentes, comprenant en outre un circuit de refroidissement (70) avec un évaporateur (71) en contact thermique avec l'au moins une pluralité d'éléments de batterie (80) et configuré pour amener un fluide de refroidissement incombustible ou ignifuge à absorber la chaleur provenant de la pluralité d'éléments de batterie alignés (80), où le fluide de refroidissement est utilisé comme agent d'extinction et l'au moins un moyen de conduite (72) fait partie du circuit de refroidissement (70).

8. Système de batterie (100) selon la revendication 7, comprenant
un premier module de batterie (91) et un deuxième module de batterie (92) agencés à distance l'un de l'autre dans une deuxième direction (z), chaque module de batterie comprenant une pluralité d'éléments de batterie alignés (80) agencés dans la première direction (y),
dans lequel l'évaporateur (71) est agencé entre des modules de batterie adjacents dans la deuxième direction (z) et est configuré sous la forme d'une plaque de support (71) qui supporte le premier module de batterie (91).

9. Système de batterie (100) selon la revendication 8,
dans lequel l'évaporateur (71) est en contact thermique avec le premier module de batterie (91) et configuré pour amener le fluide de refroidissement à absorber la chaleur provenant du premier module de batterie (91), et
dans lequel l'évaporateur (71) est positionné de sorte qu'il soit heurté par un jet de gaz d'évent émis par l'un quelconque des trous d'évent (88) du deuxième module de batterie (92) et est configuré pour être fondu par le jet de gaz d'évent.

10. Système de batterie (100) selon la revendication 8 ou 9,
dans lequel l'au moins un moyen de conduite (72) est positionné de sorte qu'il soit heurté par un jet de gaz d'évent émis par l'un quelconque des trous d'évent (88) du premier module de batterie (91).

11. Système de batterie (100) de la revendication 10, comprenant en outre une deuxième plaque de support (73) qui supporte le deuxième module de batterie (92) et est en contact thermique avec celui-ci et est configurée pour amener le fluide de refroidissement à absorber la chaleur provenant du deuxième module de batterie (92).

12. Système de batterie (100) de l'une quelconque des revendications 8 à 11, comprenant en outre au moins l'un parmi
un compresseur (74) destiné à comprimer le fluide de refroidissement de manière à augmenter la pression et la température du fluide de refroidissement ;
un condenseur (75) destiné à liquéfier le fluide de refroidissement comprimé de manière à libérer la chaleur du fluide de refroidissement comprimé ;
un papillon des gaz (76) destiné à réduire la pression et la température du fluide de refroidissement liquéfié ; et
un réservoir (77) pour le fluide de refroidissement.
